# FASCICULE DE BREVET EUROPEEN

(11) **EP 3 174 637 B1**
(45) Date de publication et mention de la délivrance du brevet: **30.10.2019**
(21) Numéro de dépôt: 15752949.6
(22) Date de dépôt: 30.07.2015
(51) Int. Cl.: B04C 5/04, B04C 5/103, B04C 5/107, B04C 5/13, B04C 5/26

(54) **DISPOSITIF DE SÉPARATION CYCLONIQUE COMPRENANT DEUX CYCLONES RELIÉS PAR UNE UNITÉ DE CANALISATION OPTIMISÉE**
ZYKLONVORRICHTUNG MIT ZWEI ZYKLONEN DIE MIT EINEM OPTIMIERTEM ROHRSYSTEM VERBUNDEN SIND
CYCLONE DEVICE COMPRISING TWO CYCLONES CONNECTED BY AN OPTIMISED PIPE SYSTEM

(30) Priorité: 30.07.2014 FR 1457387
(43) Date de publication de la demande: 07.06.2017
(73) Titulaire: Orano Cycle, 92400 Courbevoie (FR); Rolls-Royce Nuclear Field Services France, 84430 Mondragon (FR)
(72) Inventeur: JEHANNO, Jacky, F-30330 Gaujac (FR); PILISI, Franck, F-30200 Codolet (FR)
(74) Mandataire: Brevalex
(86) Numéro de dépôt international: PCT/EP2015/067478
(87) Numéro de publication internationale: WO 2016/016360

(56) Documents cités:
- EP-A1- 0 885 585
- WO-A1-2014/007755
- US-A1- 2010 083 832
- US-B1- 6 428 589

## Description

### DOMAINE TECHNIQUE

La présente invention se rapporte au domaine de la séparation cyclonique de particules solides contenues dans un fluide, notamment un gaz, et concerne plus particulièrement un dispositif à cet effet, comprenant une chambre cyclonique primaire, une chambre cyclonique secondaire, au moins un canal d'admission de fluide chargé de particules solides débouchant dans la chambre cyclonique primaire, au moins un canal de sortie du fluide épuré des particules solides raccordé à la chambre cyclonique secondaire, et une unité de canalisation raccordant la chambre cyclonique primaire à la chambre cyclonique secondaire.

### ÉTAT DE LA TECHNIQUE ANTÉRIEURE

Un tel dispositif fonctionne par la mise en rotation rapide d'un fluide afin d'en séparer les fines particules solides qui y sont initialement mélangées. La séparation résulte de la force centrifuge qui tend à déplacer les particules solides vers une paroi externe. Le frottement de ces particules le long de cette paroi induit en effet une réduction de l'énergie cinétique des particules, se traduisant par leur chute dans une chambre de collecte prévue à cet effet.

Dans un tel dispositif, la chambre cyclonique primaire, parfois dénommée « cyclone primaire », est raccordée en série à la chambre cyclonique secondaire, parfois dénommée « cyclone secondaire ». Les particules de granulométrie importante sont séparées dans la chambre cyclonique primaire tandis que les particules de granulométrie plus fine sont séparées dans la chambre cyclonique secondaire.

Le brevet US 4 853 008 décrit un exemple de dispositif de séparation cyclonique d'un type connu, comportant un cyclone primaire et un cyclone secondaire coaxiaux.

Les deux cyclones sont raccordés en série par des moyens de canalisation longeant une partie supérieure de la paroi du cyclone secondaire à l'extérieur de celui-ci. Ces moyens de canalisation sont raccordés en amont au cyclone primaire, et se terminent en aval par un dispositif de déflexion en spirale formant une entrée du cyclone secondaire.

Ce dispositif formant l'entrée du cyclone secondaire s'étend à l'extrémité supérieure de ce dernier, là où l'étendue transversale du cyclone secondaire est maximale, de manière à injecter l'air tangentiellement à la paroi du cyclone secondaire.

De ce fait, la partie supérieure du cyclone secondaire doit être logée à l'extérieur du cyclone primaire afin d'éviter que le fluide ne passe directement de l'entrée du cyclone primaire à l'entrée du cyclone secondaire et ne court-circuite ainsi le cyclone primaire. Il en résulte cependant un encombrement important du dispositif. Cela oblige en outre à prévoir des moyens de canalisation complexes et de grande longueur, de nature à induire une perte de charge importante.

De plus, les moyens de canalisation comportent une paroi ajourée ou grille au sein du cyclone primaire, permettant de filtrer les poussières de gros diamètre présentes dans le flux descendant circulant à proximité des moyens de canalisation précités.

La présence de cette grille est rendue nécessaire par la proximité entre les moyens de canalisation et le flux d'air chargé en particules solides entrant dans le cyclone primaire. L'inconvénient d'une telle grille réside cependant dans son colmatage progressif, au fur et à mesure de l'utilisation du dispositif. Un autre dispositif pour la séparation cyclonique de particules solides contenues dans un fluide est décrit dans le document US 6 428 589 B1.

### EXPOSÉ DE L'INVENTION

L'invention a notamment pour but d'apporter une solution simple, économique et efficace à ces problèmes, permettant d'éviter au moins en partie les inconvénients précités.

L'invention propose à cet effet un dispositif pour la séparation cyclonique de particules solides contenues dans un fluide, par exemple un gaz, comprenant :
- une chambre cyclonique primaire ;
- une chambre cyclonique secondaire ;
- au moins un canal d'admission de fluide chargé de particules solides, débouchant dans la chambre cyclonique primaire ;
- au moins un canal de sortie du fluide épuré des particules solides, dans lequel débouche la chambre cyclonique secondaire ; et
- une unité de canalisation qui raccorde la chambre cyclonique primaire à la chambre cyclonique secondaire, et qui est entourée par la chambre cyclonique primaire.

Selon l'invention, l'unité de canalisation comprend :
- un noyau formant une limite de la chambre cyclonique secondaire, le noyau présentant une surface externe pourvue d'au moins une rainure hélicoïdale présentant un fond qui s'éloigne d'un axe longitudinal de la chambre cyclonique secondaire en se rapprochant de cette chambre cyclonique secondaire ; et
- une coiffe recouvrant une partie du noyau de manière à délimiter, avec la ou chaque rainure hélicoïdale, un canal présentant une entrée débouchant dans la chambre cyclonique primaire et une sortie débouchant dans la chambre cyclonique secondaire.

D'une manière connue en soi, la chambre cyclonique primaire est prévue pour séparer les particules solides de granulométrie relativement importante tandis que la chambre cyclonique secondaire est prévue pour séparer les particules solides de granulométrie relativement fine.

Le fait que l'unité de canalisation soit entourée par la chambre cyclonique primaire permet de réduire l'encombrement global du dispositif.

La configuration particulière de l'unité de canalisation selon l'invention permet de rapprocher l'entrée de l'unité de canalisation par rapport à l'axe longitudinal de cette chambre, tout en rapprochant la sortie de l'unité de canalisation par rapport à une région radialement externe de cette chambre. Cela permet d'éloigner au mieux l'entrée de la chambre cyclonique secondaire par rapport à une région extérieure de la chambre cyclonique primaire dans laquelle circule le fluide chargé des particules solides de granulométrie relativement importante, tout en injectant le fluide dans la chambre cyclonique secondaire à proximité de la paroi délimitant extérieurement cette chambre.

Le risque que de telles particules solides pénètrent directement dans la chambre cyclonique secondaire en court-circuitant la chambre cyclonique primaire est ainsi réduit au minimum. L'invention permet en particulier de maintenir ce risque au minimum même dans une configuration où l'entrée de la chambre cyclonique secondaire est positionnée axialement à proximité de l'entrée de la chambre cyclonique primaire.

Un tel positionnement de la chambre cyclonique secondaire par rapport à la chambre cyclonique primaire se rencontre en particulier dans un mode de réalisation préféré de l'invention, dans lequel la chambre cyclonique secondaire est intégralement entourée par la chambre cyclonique primaire.

Par ailleurs, le canal de sortie du dispositif s'étend avantageusement au travers du noyau, le long de l'axe longitudinal de la chambre cyclonique secondaire.

De plus, une partie au moins du canal de sortie du dispositif est de préférence délimitée par une surface pourvue de cannelures brise-vortex.

De telles cannelures, s'étendant parallèlement à l'axe longitudinal de la chambre cyclonique secondaire, permettent de rompre la rotation du fluide en sortie du dispositif.

De préférence, la surface externe du noyau comporte plusieurs rainures hélicoïdales régulièrement réparties autour de l'axe longitudinal de la chambre cyclonique secondaire.

De préférence, la coiffe est formée d'une paroi de révolution centrée par rapport à l'axe longitudinal de la chambre cyclonique secondaire.

La coiffe est avantageusement conformée de manière à s'éloigner de l'axe longitudinal de la chambre cyclonique secondaire en se rapprochant de cette chambre cyclonique secondaire.

Vue selon un plan passant par l'axe longitudinal de la chambre cyclonique secondaire, la coiffe présente ainsi une courbure semblable à la courbure du fond de la ou chaque rainure hélicoïdale. L'étendue radiale du canal délimité par la coiffe et par la rainure hélicoïdale peut ainsi être maintenue constante d'un bout à l'autre de ce canal.

De préférence, la chambre cyclonique primaire est délimitée extérieurement par une paroi annulaire externe centrée par rapport à l'axe longitudinal de la chambre cyclonique secondaire et comprenant une portion tronconique convergente.

La paroi annulaire externe comporte avantageusement une portion tronconique divergente raccordée à la portion tronconique convergente de la paroi annulaire externe au niveau d'un col de cette dernière.

De préférence, la chambre cyclonique secondaire est délimitée extérieurement par une paroi annulaire interne comprenant une portion tronconique convergente et une portion tronconique divergente raccordées l'une à l'autre au niveau d'un col de la paroi annulaire interne.

Par ailleurs, la chambre cyclonique primaire débouche de préférence dans une chambre de collecte primaire destinée à recevoir les particules solides séparées au sein de cette chambre cyclonique primaire.

De plus, le dispositif comporte avantageusement des premières ailettes brise-vortex en sortie de la chambre cyclonique primaire.

De telles ailettes forment un obstacle au fluide tourbillonnant, de nature à rompre la rotation de ce fluide et limiter ainsi la remise en suspension de fines particules solides. Ces ailettes permettent ainsi de réduire les risques que les particules solides collectées dans la chambre de collecte primaire ne soient emportées par le vortex circulant au sein de la chambre cyclonique primaire.

De manière analogue, la chambre cyclonique secondaire débouche de préférence dans une chambre de collecte secondaire destinée à recevoir les particules solides séparées au sein de la chambre cyclonique secondaire.

De plus, le dispositif comporte avantageusement des deuxièmes ailettes brise-vortex en sortie de la chambre cyclonique secondaire.

Ces ailettes permettent de réduire les risques que les particules solides collectées dans la chambre de collecte secondaire ne soient emportées par le vortex circulant au sein de la chambre cyclonique secondaire.

Par ailleurs, le canal d'admission débouchant dans la chambre cyclonique primaire présente de préférence une forme hélicoïdale.

Le fluide admis dans le dispositif peut ainsi être injecté dans la chambre cyclonique primaire tangentiellement à la paroi externe de celle-ci, et dans une direction inclinée vers l'extrémité opposée de la chambre.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une vue schématique partielle en coupe longitudinale d'un dispositif selon un mode de réalisation préféré de l'invention ;
- la figure 2 est une vue à plus grande échelle d'une partie de la figure 1 ;
- la figure 3 est une vue schématique en perspective d'une partie du dispositif de la figure 1 ;
- la figure 4 est une vue schématique en perspective d'un noyau appartenant au dispositif de la figure 1 ;
- la figure 5 est une vue schématique en perspective et en coupe longitudinale d'une partie du dispositif de la figure 1 ;
- les figures 6 et 7 sont des vues schématiques du dispositif de la figure 1, respectivement en section transversale selon les plans VI-VI et VII-VII de la figure 1.

Dans l'ensemble de ces figures, des références identiques peuvent désigner des éléments identiques ou analogues.

### EXPOSÉ DÉTAILLÉ D'UN MODE DE RÉALISATION PRÉFÉRÉ

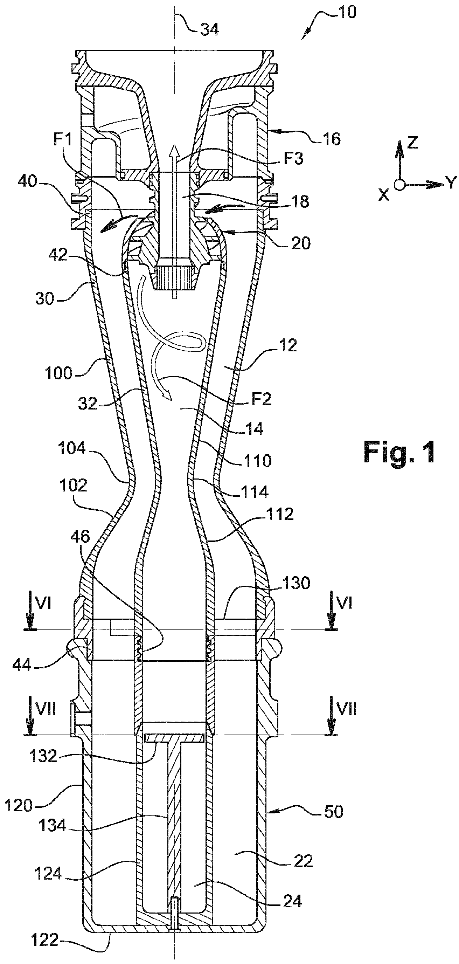

La figure 1 illustre un dispositif 10 pour la séparation cyclonique de particules solides contenues dans un fluide, tel qu'un gaz ou un liquide, selon un mode de réalisation préféré de l'invention.

Par commodité, la description qui suit est faite en référence à un repère orthonormé X, Y, Z.

D'une manière générale, le dispositif 10 comprend une chambre cyclonique primaire 12, une chambre cyclonique secondaire 14, une tête d'admission 16 pour l'admission de fluide chargé de particules solides dans la chambre cyclonique primaire, un canal de sortie 18 raccordé à la chambre cyclonique secondaire 14 pour permettre l'échappement du fluide épuré des particules solides, une unité de canalisation 20 raccordant fluidiquement la chambre cyclonique primaire 12 à la chambre cyclonique secondaire 14, une chambre de collecte primaire 22 pour collecter les particules solides de granulométrie importante, et une chambre de collecte secondaire 24 pour collecter les particules solides de granulométrie inférieure.

La chambre cyclonique primaire 12 est délimitée extérieurement par une paroi annulaire externe 30, et est délimitée intérieurement par une paroi annulaire interne 32 qui délimite extérieurement la chambre cyclonique secondaire 14. Cette chambre cyclonique secondaire 14 s'étend donc dans le volume délimité par la paroi annulaire interne 32 et est ainsi entièrement entourée par la chambre cyclonique primaire 12.

Dans l'exemple illustré, les parois annulaires 30 et 32 sont centrées par rapport à un même axe longitudinal 34 parallèle à l'axe Z, qui forme donc un axe longitudinal de chacune des chambres cycloniques 12 et 14.

La tête d'admission 16 est montée sur une première extrémité longitudinale 40 de la paroi annulaire externe 30, et l'unité de canalisation 20 est montée sur une première extrémité longitudinale 42 de la paroi annulaire interne 32, située du même côté que la tête d'admission 16.

Les parois annulaires 30 et 32 présentent respectivement des secondes extrémités longitudinales 44 et 46 sur lesquelles est monté un module de collecte 50 qui intègre les chambres de collecte 22 et 24.

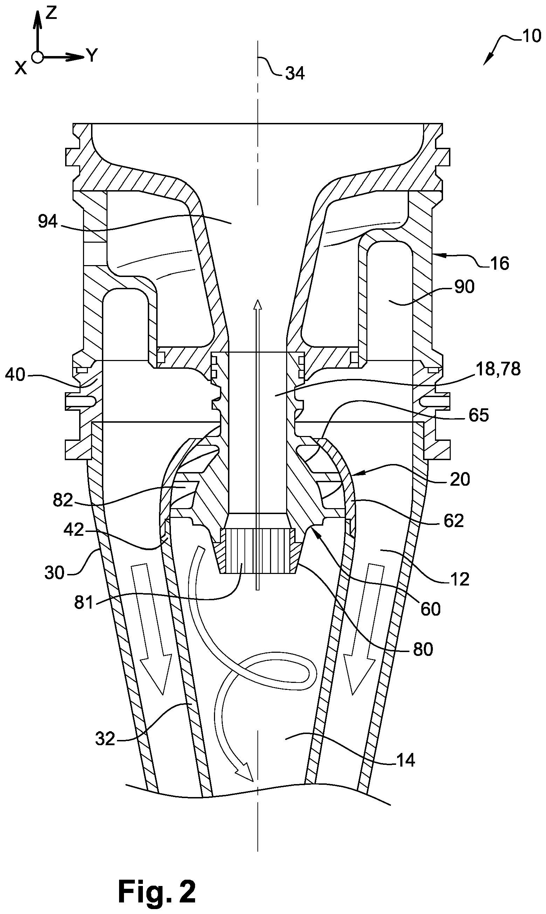

Selon l'invention, l'unité de canalisation 20 comprend un noyau 60 et une coiffe 62, qui apparaissent plus clairement sur les figures 2 à 5.

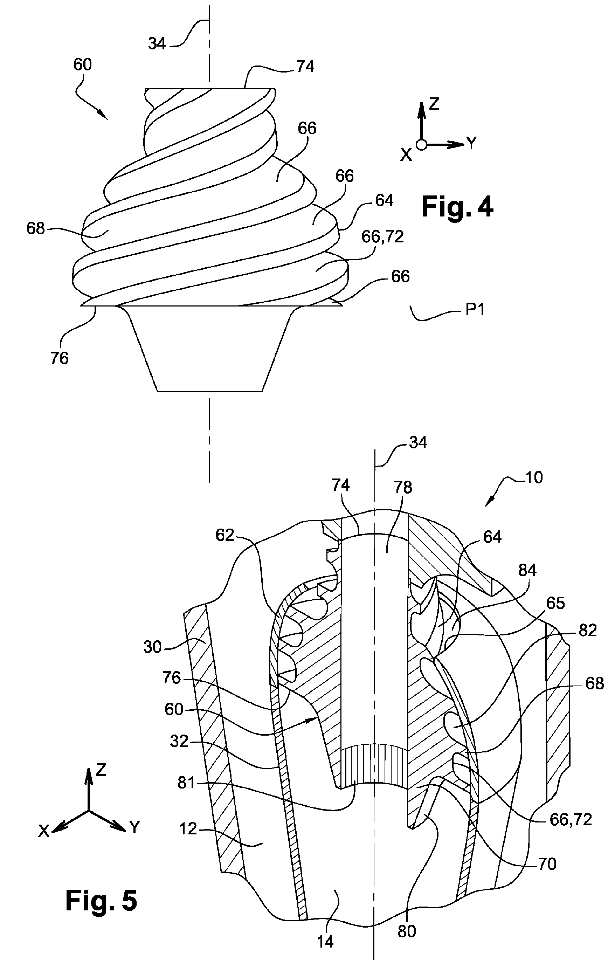

Le noyau 60 (figure 4) présente une surface externe 64 pourvue de rainures hélicoïdales 66. Ces rainures sont délimitées par des filets 68 s'étendant en saillie à partir d'un cœur 70 du noyau (figure 5). Dans la terminologie de l'invention, la surface externe 64 est donc définie comme étant constituée par l'ensemble des bords externes respectifs des filets 68.

Dans l'exemple illustré, les rainures 66 sont au nombre de quatre (figure 4). Ces rainures 66 sont réparties régulièrement autour de l'axe longitudinal du noyau 60 qui se confond avec l'axe longitudinal 34 des chambres cycloniques. Dans l'exemple illustré, chaque rainure 66 est donc décalée angulairement de 90 degrés par rapport à la rainure qui lui est consécutive dans chaque direction circonférentielle, ce décalage angulaire étant bien entendu mesuré autour de l'axe longitudinal 34.

Le noyau 60 est conformé de sorte que le fond 72 de chacune des rainures hélicoïdales 66 s'éloigne de l'axe longitudinal 34 en se rapprochant de la chambre cyclonique secondaire 14, c'est à dire en direction des cotes Z décroissantes. Plus précisément, la section transversale du noyau s'élargit depuis une première extrémité longitudinale 74 de celui-ci, située du côté de la tête d'admission 16, c'est à dire du côté des cotes Z croissantes, jusqu'à une seconde extrémité longitudinale 76 de celui-ci située du côté opposé (figure 4). Cette seconde extrémité longitudinale 76 forme une limite de la chambre cyclonique secondaire 14 et s'inscrit dans un plan transversal P1. Chacune des rainures hélicoïdales 66 débouche dans la chambre cyclonique secondaire 14 au niveau de ce plan transversal P1.

Comme le montrent les figures 2, 3 et 5, le noyau 60 comporte un canal longitudinal central 78 qui est ouvert en la première extrémité longitudinale 74 du noyau et en la seconde extrémité longitudinale 76 de celui-ci. Le canal 78, qui traverse ainsi le noyau de part en part, forme une partie du canal de sortie 18 du dispositif.

Dans l'exemple illustré, le noyau 60 comporte un bec annulaire aérodynamique 80 s'étendant en saillie au-delà de la seconde extrémité longitudinale 76 du noyau, dans la chambre cyclonique secondaire 14, de manière à prolonger le canal longitudinal central 78 pour canaliser le fluide en entrée de ce canal 78 (figure 5). La surface intérieure du bec 80 est pourvue de cannelures longitudinales 81 appelées « cannelures brise-vortex » dans ce qui suit.

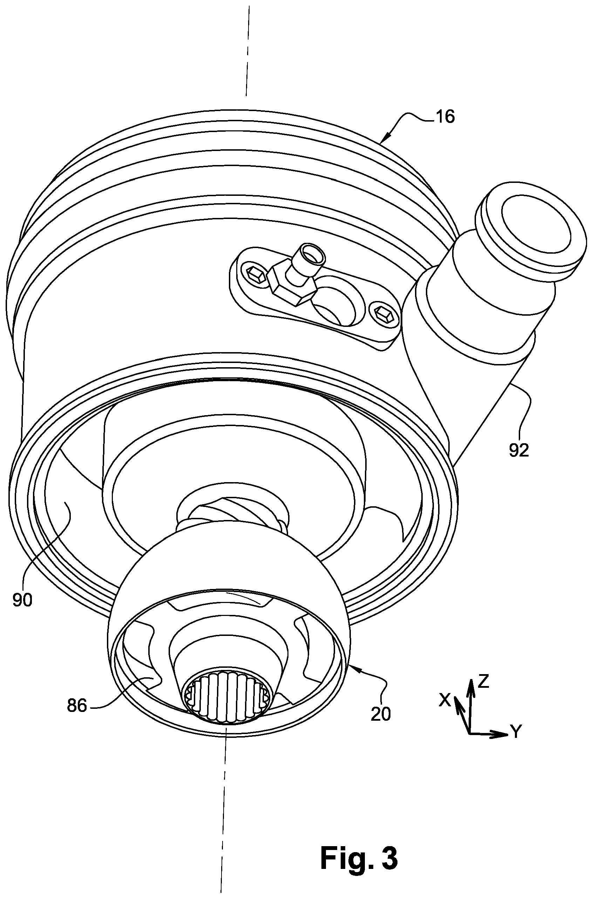

La coiffe 62 (figures 3 et 5) présente une forme complémentaire de celle d'une partie de la surface externe 64 du noyau, que la coiffe recouvre. La coiffe 62 prend ainsi avantageusement la forme d'une paroi annulaire concave en direction du noyau 60. La coiffe 62 est par exemple en forme de couronne sphérique ou de couronne d'ellipsoïde ou d'ovoïde. La coiffe 62 présente une ouverture supérieure 65 traversée par le noyau 60 (figures 2 et 5). Ce dernier présente ainsi une portion supérieure découverte.

D'une manière générale, la coiffe 62 délimite avec chacune des rainures hélicoïdales 66 un canal hélicoïdal 82 présentant une entrée 84 (figure 5) raccordée à la chambre cyclonique primaire 12 et une sortie 86 (figure 3) raccordée à la chambre cyclonique secondaire 14. Les entrées 84 respectives des canaux hélicoïdaux 82 sont formées dans l'ouverture 65 de la coiffe 62.

La coiffe 62 est ainsi conformée de manière à s'éloigner de l'axe longitudinal 34 en se rapprochant de la chambre cyclonique secondaire 14.

Vue selon le plan de la figure 2 qui passe par l'axe longitudinal 34, la coiffe 62 présente donc une courbure semblable à la courbure du fond de chaque rainure hélicoïdale 66. L'étendue radiale de chaque canal hélicoïdal 82 peut ainsi être maintenue constante d'un bout à l'autre de ce canal.

Comme le montrent les figures 2 et 3, la tête d'admission 16 intègre un canal d'admission 90 hélicoïdal ayant une extrémité débouchant dans la chambre cyclonique primaire 12 et une extrémité opposée connectée à un raccord d'entrée 92 (figure 3) destiné à être raccordé à un tuyau pour l'alimentation du dispositif en fluide à épurer.

La tête d'admission 16 comporte en outre un conduit 94 (figure 2), par exemple de forme tronconique, qui prolonge le canal longitudinal central 78 du noyau 60 et qui communique avec l'extérieur du dispositif pour permettre l'évacuation de l'air épuré des particules solides.

Comme cela apparaît sur la figure 1, la paroi annulaire externe 30 comporte une portion tronconique convergente 100 et une portion tronconique divergente 102 raccordées l'une à l'autre au niveau d'un col 104 de la paroi annulaire externe 30. La portion convergente 100 présente une section transversale de diamètre se réduisant dans la direction des cotes Z décroissantes, tandis que la portion tronconique divergente 102 présente une section transversale de diamètre s'accroissant dans la direction des cotes Z décroissantes. La paroi annulaire externe 30 présente ainsi un profil convergent-divergent.

De manière analogue, la paroi annulaire interne 32 comporte une portion tronconique convergente 110 et une portion tronconique divergente 112 raccordées l'une à l'autre au niveau d'un col 114 de la paroi annulaire interne 32. La portion convergente 110 présente une section transversale de diamètre se réduisant dans la direction des cotes Z décroissantes, tandis que la portion tronconique divergente 112 présente une section transversale de diamètre s'accroissant dans cette même direction. La paroi annulaire interne 32 présente ainsi également un profil convergent-divergent.

Le col 114 de la paroi annulaire interne 32 est positionné axialement en regard du col 104 de la paroi annulaire externe 30. De plus, la portion tronconique convergente 110 de la paroi annulaire interne 32 est positionnée axialement en regard de la portion tronconique convergente 100 de la paroi annulaire externe 30, tandis que la portion tronconique divergente 112 de la paroi annulaire interne 32 est positionnée en regard de la portion tronconique divergente 102 de la paroi annulaire externe 30.

Le module de collecte 50 comporte une paroi externe 120 de forme cylindrique de section circulaire, qui s'étend dans le prolongement de la paroi annulaire externe 30 et est fermée à son extrémité inférieure par un fond 122, ainsi qu'une paroi interne 124 également de forme cylindrique de section circulaire, qui s'étend dans le prolongement de la paroi annulaire interne 32.

La chambre de collecte primaire 22 s'étend ainsi dans le prolongement de la chambre cyclonique primaire 12 tandis que la chambre de collecte secondaire 24 s'étend dans le prolongement de la chambre cyclonique secondaire 14. Chaque chambre de collecte est raccordée de manière sensiblement étanche à la chambre cyclonique associée.

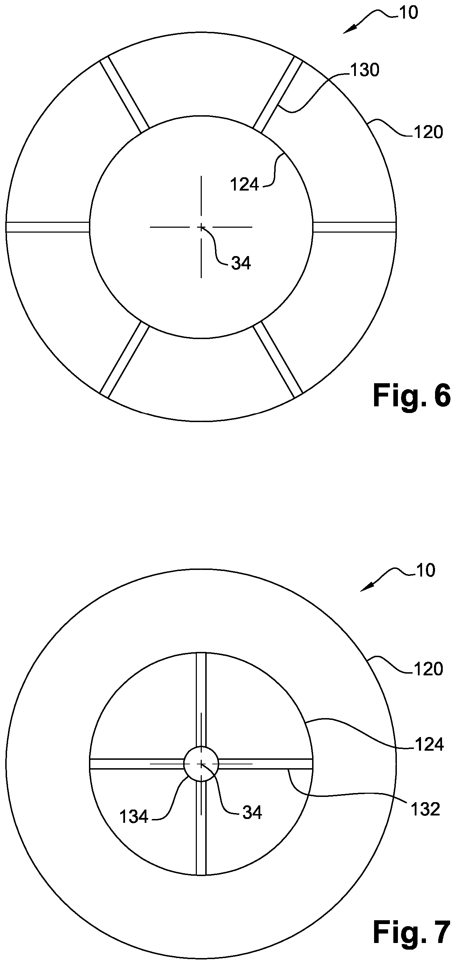

Le dispositif 10 comporte en outre des premières ailettes brise-vortex 130 en sortie de la chambre cyclonique primaire 12 (figures 1 et 6). Ces premières ailettes 130 s'étendent radialement et relient entre elles les secondes extrémités longitudinales 44 et 46 respectives des parois annulaires 30 et 32. Ces premières ailettes 130 sont régulièrement réparties autour de l'axe longitudinal 34 et sont par exemple au nombre de six. En variante, les premières ailettes peuvent relier la paroi interne 124 du module de collecte 50 à la paroi externe 120 de celui-ci.

De manière analogue, le dispositif 10 comporte des deuxièmes ailettes brise-vortex 132 en sortie de la chambre cyclonique secondaire 14 (figures 1 et 7). Ces deuxièmes ailettes 132, régulièrement réparties autour de l'axe longitudinal 34, s'étendent radialement et sont par exemple au nombre de quatre. Dans l'exemple illustré, les deuxièmes ailettes 132 relient la paroi interne 124 du module de collecte 50 à un pilier longitudinal central 134 fixé au fond 122 de ce module 50.

Il est à noter que les moyens permettant la mise en mouvement du fluide peuvent être de tout type conventionnel approprié et ne seront pas décrits en détail dans la présente description. Ces moyens comprennent typiquement une hélice motorisée agencée en sortie du conduit 94, par exemple dans un espace élargi raccordé à ce conduit 94.

Le fonctionnement du dispositif 10 va maintenant être décrit.

Le fluide chargé de particules solides est amené par un tuyau relié au raccord d'entrée 92 et pénètre par ce dernier dans le canal d'admission 90 qui imprime un mouvement tourbillonnant au fluide.

Le fluide provenant du canal d'admission 90 pénètre ainsi dans la chambre cyclonique primaire en ayant une direction sensiblement tangente à la paroi annulaire externe 30 et formant un angle aigu par rapport à un plan transversal, de sorte que le mouvement de rotation du fluide présente une composante orientée en direction des cotes Z décroissantes (figure 1 : flèche F1).

Du fait de la configuration de l'unité de canalisation 20, le fluide issu du canal d'admission 90 demeure relativement éloigné des entrées 84 respectives des canaux hélicoïdaux 82 menant à la chambre cyclonique secondaire 14, de sorte que le risque de « court-circuit » ou *« by-pass »* de la chambre cyclonique primaire 12 est réduit au minimum, malgré la proximité axiale entre les entrées 84 d'une part et la sortie du canal d'admission 90 d'autre part.

Dans la chambre cyclonique primaire 12, les particules solides de granulométrie importante sont séparées du fluide par un effet cyclonique mettant en opposition la force centrifuge, qui dépend de la masse et de la vitesse des particules et du rayon de courbure de leur trajectoire, et la force centripète induite par le gradient de dépression au sein du flux. Cet effet cyclonique est maximisé du fait du profil convergent-divergent de la paroi annulaire externe 30. Les particules solides de granulométrie importante perdent leur énergie cinétique par frottement et tombent dans la chambre de collecte primaire 22. De plus, le positionnement du cyclone secondaire au sein du cyclone primaire permet d'annihiler tout vortex ascendant du type habituellement présent dans un cyclone traditionnel. Le risque de reprise des particules solides par un tel vortex ascendant peut ainsi être évité.

Les premières ailettes brise-vortex 130 permettent d'interrompre le flux tourbillonnant à l'entrée de la chambre de collecte primaire 22 et de réduire encore davantage les risques de retour de particules solides dans la chambre cyclonique primaire 12.

Au niveau de la partie supérieure découverte du noyau 60, le fluide tourbillonnant prend la forme d'une spirale dont la partie radialement interne, épurée des particules solides de granulométrie importante, pénètre dans les entrées 84 respectives des canaux hélicoïdaux 82 de l'unité de canalisation 20.

Le fluide parcourt ces canaux hélicoïdaux 82 en étant canalisé par les filets 68 et la coiffe 62 qui contribuent à maintenir le mouvement rotatif du fluide et permettent une injection de ce dernier dans la chambre cyclonique secondaire 14 selon une orientation sensiblement tangente à la paroi annulaire interne 32 et formant un angle aigu par rapport à un plan transversal, de sorte que le mouvement de rotation du fluide présente ici encore une composante orientée en direction des cotes Z décroissantes (figure 1 : flèche F2).

Au sein de la chambre cyclonique secondaire 14, les particules solides de granulométrie relativement fine sont séparées du fluide par un effet cyclonique analogue à l'effet décrit ci-dessus. Ces particules solides perdent leur énergie cinétique par frottement et tombent dans la chambre de collecte secondaire 24.

Les deuxièmes ailettes brise-vortex 132 permettent d'interrompre le flux tourbillonnant à l'entrée de la chambre de collecte secondaire 24 et de réduire ainsi les risques de retour de particules solides dans la chambre cyclonique secondaire 14.

Le fluide épuré des particules solides s'écoule vers les cotes Z croissantes au centre de la chambre cyclonique secondaire à partir du bas de cette dernière, puis pénètre dans le canal longitudinal central 78 du noyau 60 en étant canalisé par le bec annulaire aérodynamique 80 (figure 1 : flèche F3). Les cannelures brise-vortex 81 permettent de perturber tout éventuel mouvement tourbillonnant résiduel du fluide à l'entrée du canal 78.

Le fluide s'échappe enfin du dispositif par le conduit 94.

L'invention offre donc un dispositif de séparation cyclonique alliant des performances optimales à un encombrement réduit.

## Revendications

1. Dispositif (10) pour la séparation cyclonique de particules solides contenues dans un fluide, comprenant :
- une chambre cyclonique primaire (12) ;
- une chambre cyclonique secondaire (14) ;
- au moins un canal d'admission (90) de fluide chargé de particules solides, débouchant dans ladite chambre cyclonique primaire ;
- au moins un canal de sortie (18) du fluide épuré des particules solides, dans lequel débouche ladite chambre cyclonique secondaire ; et
- une unité de canalisation (20) raccordant ladite chambre cyclonique primaire à ladite chambre cyclonique secondaire ;
dans lequel ladite unité de canalisation est entourée par la chambre cyclonique primaire ; ladite unité de canalisation comprenant :
- un noyau (60) formant une limite de ladite chambre cyclonique secondaire, ledit noyau présentant une surface externe (64) pourvue d'au moins une rainure hélicoïdale (66) présentant un fond (72) qui s'éloigne d'un axe longitudinal (34) de ladite chambre cyclonique secondaire en se rapprochant de ladite chambre cyclonique secondaire ; et
- une coiffe (62) recouvrant une partie dudit noyau de manière à délimiter, avec ladite au moins une rainure hélicoïdale, un canal hélicoïdal (82) présentant une entrée (84) débouchant dans ladite chambre cyclonique primaire et une sortie (86) débouchant dans ladite chambre cyclonique secondaire.

2. Dispositif selon la revendication 1, dans lequel la chambre cyclonique secondaire (14) est intégralement entourée par la chambre cyclonique primaire (12).

3. Dispositif selon la revendication 1 ou 2, dans lequel le canal de sortie (18) du dispositif s'étend au travers du noyau (60), le long de l'axe longitudinal (34) de la chambre cyclonique secondaire.

4. Dispositif selon la revendication 3, dans lequel une partie au moins du canal de sortie (18) du dispositif est délimitée par une surface pourvue de cannelures brise-vortex (81).

5. Dispositif selon l'une quelconque des revendications 1 à 4, dans lequel ladite au moins une rainure hélicoïdale comporte plusieurs rainures hélicoïdales (66) régulièrement réparties autour de l'axe longitudinal (34) de la chambre cyclonique secondaire.

6. Dispositif selon l'une quelconque des revendications 1 à 5, dans lequel la coiffe (62) est formée d'une paroi de révolution centrée par rapport à l'axe longitudinal (34) de la chambre cyclonique secondaire.

7. Dispositif selon l'une quelconque des revendications 1 à 6, dans lequel la chambre cyclonique primaire (12) est délimitée extérieurement par une paroi annulaire externe (30) centrée par rapport à l'axe longitudinal (34) de la chambre cyclonique secondaire et comprenant une portion tronconique convergente (100).

8. Dispositif selon la revendication 7, dans lequel ladite paroi annulaire externe (30) comporte une portion tronconique divergente (102) raccordée à la portion tronconique convergente (100) de ladite paroi annulaire externe au niveau d'un col (104) de cette dernière.

9. Dispositif selon l'une quelconque des revendications 1 à 8, dans lequel la chambre cyclonique secondaire (14) est délimitée extérieurement par une paroi annulaire interne (32) comprenant une portion tronconique convergente (110) et une portion tronconique divergente (112) raccordées l'une à l'autre au niveau d'un col (114) de ladite paroi annulaire interne.

10. Dispositif selon l'une quelconque des revendications 1 à 9, dans lequel la chambre cyclonique primaire (12) débouche dans une chambre de collecte primaire (22) destinée à recevoir les particules solides séparées au sein de la chambre cyclonique primaire, le dispositif comportant des premières ailettes brise-vortex (130) en sortie de la chambre cyclonique primaire.

11. Dispositif selon l'une quelconque des revendications 1 à 10, dans lequel la chambre cyclonique secondaire (14) débouche dans une chambre de collecte secondaire (24) destinée à recevoir les particules solides séparées au sein de la chambre cyclonique secondaire, le dispositif comportant des deuxièmes ailettes brise-vortex (132) en sortie de la chambre cyclonique secondaire.

12. Dispositif selon l'une quelconque des revendications 1 à 11, dans lequel ledit au moins un canal d'admission (90) présente une forme hélicoïdale.

## Patentansprüche

1. Vorrichtung (10) für das zyklonische Abtrennen von festen Partikeln, welche in einem Fluid enthalten sind, umfassend:
- eine primäre zyklonische Kammer (12);
- eine sekundäre zyklonische Kammer (14);
- wenigstens einen Aufnahmekanal (90) für mit festen Partikeln geladenes Fluid, welcher in die primäre zyklonische Kammer mündet;
- wenigstens einen Ausgangskanal (18) für von den festen Partikeln gereinigtes Fluid, welcher in die sekundäre zyklonische Kammer mündet; und
- eine Kanalisationseinheit (20), welche die primäre zyklonische Kammer mit der sekundären zyklonischen Kammer verbindet;
wobei die Kanalisationseinheit von der primären zyklonischen Kammer umgeben ist;
wobei die Kanalisationseinheit umfasst:
- einen Kern (60), welcher eine Grenze der sekundären zyklonischen Kammer bildet, wobei der Kern eine externe Fläche (64) aufweist, welche mit wenigstens einer schraubenförmigen Nut (66) versehen ist, welche einen Boden (72) aufweist, welcher sich von einer longitudinalen Achse (34) der sekundären zyklonischen Kammer entfernt, wenn er sich der sekundären zyklonischen Kammer annähert; und
- eine Kappe (62), welche einen Teil des Kerns derart bedeckt, dass mit der wenigstens einen schraubenförmigen Nut ein schraubenförmiger Kanal (82) begrenzt wird, welcher einen Eingang (84), welcher in die primäre zyklonische Kammer mündet, sowie einen Ausgang (86) aufweist, welcher in die sekundäre zyklonische Kammer mündet.

2. Vorrichtung nach Anspruch 1, wobei die sekundäre zyklonische Kammer (14) integral von der primären zyklonischen Kammer (12) umgeben ist.

3. Vorrichtung nach Anspruch 1 oder 2, wobei sich der Ausgangskanal (18) der Vorrichtung durch den Kern (60) hindurch entlang der longitudinalen Achse (34) der sekundären zyklonischen Kammer erstreckt.

4. Vorrichtung nach Anspruch 3, wobei ein Teil von wenigstens dem Ausgangskanal (18) der Vorrichtung durch eine Fläche begrenzt ist, welche mit Wirbelbrecher-Rillen (81) versehen ist.

5. Vorrichtung nach einem der Ansprüche 1 bis 4, wobei die wenigstens eine schraubenförmige Nut mehrere schraubenförmige Nuten (66) umfasst, welche um die longitudinale Achse (34) der sekundären zyklonischen Kammer gleichmäßig verteilt sind.

6. Vorrichtung nach einem der Ansprüche 1 bis 5, wobei die Kappe (62) durch eine Drehwand gebildet ist, welche bezüglich der longitudinalen Achse (34) der sekundären zyklonischen Kammer zentriert ist.

7. Vorrichtung nach einem der Ansprüche 1 bis 6, wobei die primäre zyklonische Kammer (12) extern durch eine externe ringförmige Wand (30) begrenzt ist, welche bezüglich der longitudinalen Achse (34) der sekundären zyklonischen Kammer zentriert ist und einen konvergenten konischen Abschnitt (100) umfasst.

8. Vorrichtung nach Anspruch 7, wobei die externe ringförmige Wand (30) einen divergenten konischen Abschnitt (102) umfasst, welcher mit dem konvergenten konischen Abschnitt (100) der externen ringförmigen Wand auf dem Niveau eines Kragens (104) des letzteren verbunden ist.

9. Vorrichtung nach einem der Ansprüche 1 bis 8, wobei die sekundäre zyklonische Kammer (14) extern durch eine interne ringförmige Wand (32) begrenzt ist, welche einen konvergenten konischen Abschnitt (110) und einen divergenten konischen Abschnitt (112) umfasst, welche miteinander auf dem Niveau eines Kragens (114) der internen ringförmigen Wand verbunden sind.

10. Vorrichtung nach einem der Ansprüche 1 bis 9, wobei die primäre zyklonische Kammer (12) in eine primäre Sammelkammer (22) mündet, welche dazu vorgesehen ist, die festen Partikel aufzunehmen, welche innerhalb der primären zyklonischen Kammer abgetrennt worden sind, wobei die Vorrichtung erste Wirbelbrecher-Flügel (130) am Ausgang der primären zyklonischen Kammer umfasst.

11. Vorrichtung nach einem der Ansprüche 1 bis 10, wobei die sekundäre zyklonische Kammer (14) in eine sekundäre Sammelkammer (24) mündet, welche dazu vorgesehen ist, die festen Partikel aufzunehmen, welche innerhalb der sekundären zyklonischen Kammer abgetrennt worden sind, wobei die Vorrichtung zweite Wirbelbrecher-Flügel (132) am Ausgang der sekundären zyklonischen Kammer umfasst.

12. Vorrichtung nach einem der Ansprüche 1 bis 11, wobei der wenigstens eine Aufnahmekanal (90) eine schraubenförmige Form aufweist.

## Claims

1. Device (10) for the cyclonic separation of solid particles contained in a fluid, comprising:
- a primary cyclone chamber (12);
- a secondary cyclone chamber (14);
- at least one inlet channel (90) for fluid loaded with solid particles, opening into said primary cyclone chamber;
- at least one outlet channel (18) for fluid cleaned of the solid particles, into which opens said secondary cyclone chamber; and
- a ducting unit (20) connecting said primary cyclone chamber to said secondary cyclone chamber;
wherein said ducting unit is surrounded by the primary cyclone chamber;
wherein said ducting unit comprises:
- a core (60) forming a limit of said secondary cyclone chamber, said core having an outer surface (64) provided with at least one helical groove (66) having a bottom (72) that diverges from a longitudinal axis (34) of said secondary cyclone chamber in a direction towards said secondary cyclone chamber; and
- a cap (62) covering a part of said core in such a way as to delimit, with said at least one helical groove, a helical channel (82) having an inlet (84) opening into said primary cyclone chamber and an outlet (86) opening into said secondary cyclone chamber.

2. Device according to claim 1, in which the secondary cyclone chamber (14) is integrally surrounded by the primary cyclone chamber (12).

3. Device according to claim 1 or 2, in which the outlet channel (18) of the device extends through the core (60), along the longitudinal axis (34) of the secondary cyclone chamber.

4. Device according to claim 3, in which a part at least of the outlet channel (18) of the device is delimited by a surface provided with vortex breaker splines (81).

5. Device according to any of claims 1 to 4, in which said at least one helical groove comprises several helical grooves (66) regularly distributed around the longitudinal axis (34) of the secondary cyclone chamber.

6. Device according to any of claims 1 to 5, in which the cap (62) is formed of a wall of revolution centred with respect to the longitudinal axis (34) of the secondary cyclone chamber.

7. Device according to any of claims 1 to 6, in which the primary cyclone chamber (12) is delimited externally by an outer annular wall (30) centred with respect to the longitudinal axis (34) of the secondary cyclone chamber and including a convergent tapered portion (100).

8. Device according to claim 7, in which said outer annular wall (30) includes a divergent tapered portion (102) connected to the convergent tapered portion (100) of said outer annular wall at the level of a neck (104) of the latter.

9. Device according to any of claims 1 to 8, in which the secondary cyclone chamber (14) is delimited externally by an inner annular wall (32) comprising a convergent tapered portion (110) and a divergent tapered portion (112) connected to each other at the level of a neck (114) of said inner annular wall.

10. Device according to any of claims 1 to 9, in which the primary cyclone chamber (12) opens into a primary collection chamber (22) intended to receive the solid particles separated within the primary cyclone chamber, the device including first vortex breaker blades (130) at the outlet of the primary cyclone chamber.

11. Device according to any of claims 1 to 10, in which the secondary cyclone chamber (14) opens into a secondary collection chamber (24) intended to receive the solid particles separated within the secondary cyclone chamber, the device including second vortex breaker blades (132) at the outlet of the secondary cyclone chamber.

12. Device according to any of claims 1 to 11, in which said at least one inlet channel (90) has a helical shape.
